(12)

# EUROPEAN PATENT APPLICATION

(21) Application number: **87307648.3**

(22) Date of filing: **28.08.87**

(51) Int. Cl.⁴: **C 04 B 28/14**
**E 04 C 2/06**
**//(C04B28/14,14:38,22:00,**
**22:06),(C04B28/14,18:24,22:00,**
**22:06)**

(30) Priority: **28.08.86 US 901239   21.08.87 US 86820**

(43) Date of publication of application:
**02.03.88   Bulletin   88/09**

(84) Designated Contracting States:
**AT BE DE FR GB NL SE**

(71) Applicant: **Winroc Holdings Ltd.**
**5018-80th Avenue, S.E.**
**Calgary Alberta T2C 2X3 (CA)**

(72) Inventor: **Flanagan, Richard J.**
**2648 Charlebois**
**Hudson Quebec, JOB 1VO (CA)**

**Jack, Wayne A.**
**1002-1001 14th Avenue S.W.**
**Calgary Alberta, T2C 2X3 (CA)**

**Vincent, Gerald H.**
**2758 N.E. 15th Street**
**Fort Lauderdale Florida 33304 (US)**

(74) Representative: **Enskat, Michael Antony Frank et al**
**Saunders & Dolleymore 2 Norfolk Road**
**Rickmansworth Hertfordshire WD3 1JH (GB)**

(54) **High-strength, fire-resistant gypsum composition.**

(57) The invention relates to a novel high-strength, fire-resistant composition containing calcium sulphate hemihydrate, a boron compound having fire-resistant properties including boric acid, anhydrous boric acid, sodium tetraborate decahydrate (borax) and sodium borate anhydrous, and aluminium and/or silicon compound including aluminium hydroxide, aluminium oxide and sodium aluminate and sodium silicate, silicon dioxide, silica gel and silicic acid, natural or synthetic fibres and water. Such compositions can be used in building materials such as wallboard, thermal insulation, fire breaks and soundproofing panels. More particularly the invention constitutes a much improved type of composition having greater strength and fire-resistance when compared to standard gypsum wallboard and fire related gypsum wallboard. The application of this composition in slurry form and the use of this novel composition for use in finishing joints between wallboard are also contemplated.

EP 0 258 064 A2

**Description**

A NEW HIGH-STRENGTH, FIRE-RESISTANT GYPSUM COMPOSITION

The present invention relates to a novel high-strength, fire-resistant composition containing calcium sulphate hemihydrate, a boron compound having fire-resistant properties including boric acid, anhydrous boric acid, sodium tetraborate decahydrate (borax) and sodium borate anhydrous, and aluminum and/or silicon compound including aluminum hydroxide, aluminum oxide and sodium aluminate and sodium silicate, silicon dioxide, silica gel and silicic acid, natural or synthetic fibers and water. Such compositions can be used in building materials such as wallboard, thermal insulation, fire breaks and soundproofing panels. More particularly, the present invention constitutes a much improved type of composition having greater strength and fire-resistance when compared to standard gypsum wallboard and fire-rated gypsum wallboard.

According to the present invention the naturally occurring calcium sulphate hemihydrate (stucco), which is commonly used in the fabrication of construction elements such as wallboard, is combined with a fire-retarding agent selected from the boron compounds having fire retarding properties including boric acid, anhydrous boric acid, sodium tetraborate decahydrate (borax) and sodium borate anhydrous; a strengthening agent selected from aluminum compounds including aluminum hydroxide, aluminum oxide and sodium aluminate and silicon compounds including sodium silicate, silicon dioxide, silica gel and silicic acid; a fiber reinforcing material selected from natural and synthetic fibers; and water. These new compositions exhibit several important advantages for application in the construction field.

Calcium sulphate hemihydrate, although it is commonly utilized in the prior art as a component for fabrication of construction materials such as wallboard, has little ability to withstand fire or severe heat conditions. Many building codes require that construction materials be able to withstand fire and retard heat transmission to a certain extent. Numerous standards exist to measure the ability of gypsum board to survive fire conditions. Standard gypsum board is rated by its ability to resist flame spreading across the surface. (National Standard of Canada/Underwriters Laboratory of Canada Standard No.: CAN4-S102-M80). The same standard measures the thermal conductivity of gypsum board.

Gypsum board which is fire-rated is measured for its fire endurance quality according to a different standard (National Standard of Canada/Underwriters Laboratory of Canada Standard No.: CAN4-S101-M82). In this test a specimen of gypsum board is loaded with a predetermined force and the time required for a board sample to fracture is measured. In addition the ability of the board sample to survive the stream of cold water directed on its surface after exposure to the previous fire endurance test is measured in the "hose-stream test".

Other standards exist which serve to measure the suitability of gypsum board for various purposes. A commonly recognized set of criteria are the so-called "2-hour" and "4-hour" fire ratings of the New York City Board of Standards and Appeals. For example, a 2-hour rating requires that the temperature on one side of a partition wall or the like does not rise to 250°F above ambient temperature within two hours while the other side is being continuously exposed to intense heat and/or flames. That is, the 250°F temperature rise must not be reached on the non-exposed side before two hours in order to comply with the code. Generally, in order for prior art gypsum boards to be able to obtain the 2-hour fire rating, a studded wall system comprising two pairs of 5/8 thick gypsum boards are used.

In contrast, it is an object of the present invention to provide core compositions having greater strength and fire-resistance and thereby allowing for the use of wallboard of reduced thickness to achieve the required fire rating. A reduction in the thickness of the wallboard would offer untold advantages in storage, transportation and installation of the wallboard thereby resulting in a substantial reduction in not only the cost of the wallboard itself, but also the attendant costs involved in the transportation and storage as well.

In preparing gypsum panels for use in building materials, calcium sulphate hemihydrate (stucco) is mixed with the stoichiometric amount of water to form the dihydrate, which crystallizes to form rigid gypsum. Such material is formed into sheets with paper wrappers. These sheets are used as construction materials in walls and ceilings where they offer sound insulation. Their main use however, as noted above, is to provide protection against the transmission of fires through walls.

Gypsum prepared in this manner exhibits relatively poor fire-resistance, since under heating the calcium sulphate dihydrate loses water of crystallization to revert to the hemihydrate. This causes the gypsum board to shrink with the formation of cracks. The cracked board is much weaker and can collapse. The cracking also contributes to the passage of excessive heat and hot gases through the gypsum board wall, hastening the disintegration of the board under these adverse conditions. To overcome the weakening of the board due to crack formation it is present practice to add fibers to the stucco to provide reinforcement.

Typically standard gypsum board is reinforced with fibers derived from waste newsprint pulp. Under fire conditions the newsprint pulp offers limited endurance since it too burns or chars and is consumed. To overcome this limitation special fire-rated gypsum board pulp compositions employ fibers made of fiber glass. U.S. Patent No. 2,681,863, for example, teaches that the even distribution of individual short textile glass fibers throughout a gypsum cast remarkably reduces cracking when the cast, such as in the form of a core of a gypsum wallboard, is subjected to fire. It should be noted, however, that while fiber glass will not burn, it will melt eventually and weaken the board. A main disadvantage of using glass fibers is the additional cost of such fibers compared to newspaper pulp.

A principal object of the present invention, therefore is to provide novel gypsum core compositions which

2

utilize natural or synthetic fibers to impart increased mechanical strength and as well exhibit increased fire strength and structural integrity over the gypsum wallboard of prior art.

It can be seen that any gypsum composition that provides increased resistence to fire spread across its surface, increased fire endurance and increased fire strength would represent a new improved composition. In order to be consistent in the usage of terminology, resistance to surface fire spread refers to the degree with which the paper wrapper of the gypsum board flames and allows the fire to spread across its surface; fire endurance refers to the ability of the gypsum board to maintain its structural integrity under fire conditions; and fire strength refers to the ability of the board to stand compressive and torsional forces under fire conditions. It can be seen that fire endurance and strength are related, with fire strength representing a more critical measurement. Thus any board sample with sufficient fire strength will also have sufficient fire endurance.

The prime requirement of fire-rated gypsum is therefore fire strength. The present invention represents the results of numerous experiments carried out to determine the factors which could be altered, and what additional factors could be added to existing processes, to increase the fire strength of gypsum board.

The present invention provides an improved type of gypsum board which has more fire strength than previous compositions. This is achieved through the use of modifiers. These modifiers include aluminum compounds including aluminum hydroxide, aluminum oxide and sodium aluminate; silicon compounds including sodium silicate, silicon dioxide, silica gel and silicic acid and boron compounds including boric acid, and anhydrous boric acid, sodium tetraborate decahydrate (borax) and sodium borate anhydrous. The boron compounds act as a fire retardant and permits the use of previously combustible fibers such as paper and wood fibers to replace the fiber glass fibers of fire-rated board. The combination of boric acid and natural fibers offers greater strength in the presence of fire than fiber glass. Since the paper wrapper in gypsum offers considerable mechanical strength to the board and since this mechanical strength is rapidly diminished under fire conditions, the use of a fire retardant such as boric acid greatly improves the fire strength of the board.

Additionally, the present invention allows for the use of any inexpensive long fiber pulp such as kraft paper pulp, cotton or straw pulp. There is a relationship between fiber length and fire strength and the longer length of these fibers greatly increases the fire strength of the resultant board to a point not previously achieved with fiber glass.

Furthermore, the present invention uses the addition of the above-mentioned silicon and aluminum compounds to a mixture of calcium sulphate hemihydrate, boron compounds, particularly boric acid and long fiber pulps to greatly increase the mechanical strength and fire-strength of the resulting board. The preferred strengthening agent of this invention is aluminum hydroxide. The increased strength is based on chemical principles in which the larger diameter of the aluminum ion and its trivalent nature provides greater stability for the resulting calcium sulphate hemihydrate crystal structure.

A distinction is made between mechanical strength and fire-strength. While the latter has been defined above and is measured under fire conditions, mechanical strength simply represents the ability of the board to survive the stresses of the handling under construction conditions. Gypsum board is brittle and cracks readily. A board with improved mechanical strength would allow for easier handling or indeed lighter board. The advantages in storage, transportation and installation of lighter wallboard and the attendant savings in cost have been discussed above.

Another aspect of the present invention is the utilization of calcium sulphate hemihydrate (stucco) that has been hammer milled after calcining. Such treatment of the stucco results in material with a greatly increased mechanical strength and fire-strength. This comes about because the individual particles are much smaller in size resulting in a finer grained crystalline structure for the produced gypsum board. The particles of stucco are also less rounded and have a discrete angular shape resulting in greater cohesion.

The fire endurance of this gypsum board can be greatly improved by the addition of fibers which supply reinforcement to help the board overcome damage due to heat, shrinkage and cracking. Such fibers can be of many types but economic considerations predicate the use of natural fibers such as waste newsprint pulp, kraft paper pulp or any long fiber pulp. Synthetic reinforcing fibers may also be used but it is not necessary to use man-made organic fibers such as fiber glass since the fiber retarding properties of boric acid render the natural fibers non-flammable. This results in considerable savings in the cost of production. This ability to achieve the same degree of reinforcement with previously unsuitable fibers such as newsprint pulp is one of the major advantages of this invention. In fact, by selecting pulp with longer fibers, greater reinforcement was achieved than has been possible to date with fiber glass. The net result is a stronger board with greater fire-strength and at a cheaper cost.

It is therefore an objection of the present invention to provide gypsum-containing wallboard compositions having greatly enhanced mechanical strength, fire strength and fire-resistant properties compared to prior art gypsum core wallboard construction.

Another object of the present invention is to provide more efficient utilization of construction material in wallboard by reducing the weight of walls, while greatly increasing the mechanical and fire-strength of the wallboard and exceeding the fire-resistant and fire-retardant characteristics of the prior art gypsum wallboard.

When exposed to heat, ordinary gypsum will transform to powder since the $CaSO_4.2 H_2O$ loses some water of hydration at about 128°C to $CaSO_4.1/2 H_2O$, the hemihydrate form. The anhydride form is reached at about 163°F. It is generally known that when gypsum is heated to a high enough temperature, i.e. in the range of 205° to 232°F, it loses its structural integrity and crumbles. In contrast, the compositions of the present invention utilizing boron compounds having fire retarding properties and the suitable aluminum and silicon compounds mixed with calcium sulphate hemihydrate and water, when subjected to high temperatures and heat will have increased strength and structural integrity rather than crumbling. Thus, any gypsum wallboard utilizing these compositions as its core will have increased mechanical and fire strength and maintain its structural integrity under adverse heat conditions in comparison with the present prior art gypsum board compositions.

A further feature of this invention therefore is the provision of compositions which maintain structural integrity when subjected to high heat and therefore are useful particularly in wallboard construction including thermal insulation, fire breaks and soundproofing panels etc., which desirably withstand destruction for safety and other reasons when subjected to high heat such as is generated by a fire in a building.

The composition according to the present invention is comprised of calcium sulphate hemihydrate; a fire retarding agent selected from boric acid, boric anhydride, sodium borate anhydrous and borax in an amount of from about 1% to 25% of the calcium sulphate hemihydrate; a strengthening agent selected from aluminum compounds including aluminum hydroxide, aluminum oxide and sodium aluminate, and silicon compounds including sodium silicate, silicon dioxide, silica gel and silicic acid, said strengthening agent being present in amount of from about 1% to 25% of the calcium sulphate hemihydrate; a fiber reinforcing material selected from natural or synthetic fibers including newsprint pulp, kraft pulp, cotton pulp, fiber glass resins, carbon fibers or any long fiber material, said fiber reinforcing material being present in an amount of from about 1% to 5% of the calcium sulphate hemihydrate; and water.

These compositions are preferably used in the preparation of gypsum wallboard for use in building construction. These compositions are principally used to form the core of the wallboard, the wallboard having additionally a coversheet bonded to each surface of the core matrix. The coversheet is composed of paper and may optionally be treated with boric acid or one of the other boron compounds having fire-resistant properties. Such a treatment would further enhance the fire-resistancy of the wallboard of the present invention. Thus, the preferred application for the compositions of the present invention is to form the core matrix of gypsum wallboard for use in the construction industry.

Preferably the gypsum wallboard is comprised of a cover sheet bonded to each surface thereof and a core matrix, said core matrix comprising a fire-resistant composition having increased mechanical and fire strength and structural integrity when subjected to elevated. temperatures in a range of from 205°C to 1100°C, said composition comprising calcium sulphate hemihydrate and in dry weight percent of the calcium sulphate hemihydrate, a fire retarding agent selected from boron compounds including boric acid, anhydrous boric acid, sodium tetraborate decahydrate (borax) and sodium borate anhydrous in an amount from about 1 to 25%; a strengthening agent selected from aluminum compounds including aluminum hydroxide, ammonium oxide and sodium aluminate and silicon compounds including sodium silicate, silicon dioxide, silica gel and silicic acid in an amount of from about 1% to 25%; a natural or synthetic fiber reinforcing material including newsprint pulp, kraft pulp, cotton pulp, straw pulp, fiber glass resins, carbon fibers or any long fiber material in an amount of from about 1 to 5% and water.

A further feature of this invention is the provision of a fire resistant composition comprising gypsum, natural or synthetic long fiber pulp, a boron compound having fire-resistant properties and a strengthening agent selected from suitable aluminum and silicon compounds and providing increased mechanical and fire strength and being suitable for use in construction components such as wallboard, thermal insulation panels, sound insulation panels and other sound proofing and fire proofing applications such as to provide protective coverings when applied in slurry form. Such compositions have a highly stable structural integrity under adverse conditions.

Another aspect of the present invention is the provision of a process for producing a fire-resistant composition having increased mechanical and fire-strength comprising a mixture of gypsum, a fire retarding compound of boron such as boric acid, anhydrous boric acid, sodium tetraborate decahydrate (borax) and sodium borate anhydrous and a strengthening agent selected from an ammonium compound including aluminum hydroxide, aluminum oxide and sodium aluminate and silicon compounds including sodium silicate, silicon dioxide, silica gel and silicic acid.

In a preferred embodiment of the process of the present invention, the gypsum utilized to form the composition of the present invention is derived from freshly calcined stucco which has been subjected to hammer or impact milling to reduce the particle size and provide a more even distribution of particle sizes. The hammer milling also provides particles with a more angular shape.

In a most preferred embodiment of the present invention, the hammer milled stucco is mixed with water to provide a suitable slurry and mixed with an additional quantity of aluminium hydroxide, typically 5%, and then boric acid is added to the resultant slurry. Alternatively, the boric acid may be added to the bi-product calcium sulphate dihydrate prior to the hammer milling process. Optionally, additional agents to reduce the density of the composition such foaming agents or retarding agents and accelerating agents may be added to provide the correct setting time.

In a further aspect of the present invention, the compositions according to the present invention may be applied in situ by spraying the composition onto an object. Therefore, an additional advantage of this invention is the provision that a fire-resistant composition may be applied directly to an object by spraying thereon as a slurry.

In yet a further feature of the present invention, the compositions according to the present invention is

4

adapted for use in finishing wallboard joints. Gypsum board when used for wall covering is commonly goined using a mineral based filler in conjunction with paper tape. The primary purpose of this filler is to cover the obvious spaces where the individual boards are joined. The joint filler also provides some protection against the transmission of fire but this aspect of its use does not appear to be covered under any Federal or Provincial fire regulations.

As a result of this lack of regulation of joint filling compounds, the main focus of their formulation is, for the most part, the ease of their use. Thus many joint compounds are no longer gypsum based and contain lightweight materials and vinyl adhesives. These fillers have much reduced resistance to fire transmission.

It is therefore a further object of the present invention to provide a joint finishing composition having increased fire-resistance qualities.

A still further object of the invention is to provide a joint finishing composition which can be used, with and without a taping material, to complete fill the joint between the wallboard panels.

Therefore, the invention further relates to a fire-resistant composition adapted for use in finishing joints between wallboard panels and which exhibits increased mechanical strength and fire-strength when subjected to elevated temperatures, the composition comprising.

(a) calcium sulfate hemihydrate;

(b) a long-fiber reinforcing material in an amount of from about 1% to 5% of the calcium sulfate hemihydrate;

(c) a fire-retarding agent in an amount of from about 1% to 25% of the calcium sulfate hemihydrate;

(d) a strengthening agent in an amount of from about 1% to 25% of the calcium sulfate hemihydrate; and

(e) water.

Preferably, the fiber-reinforcing material is selected from natural and synthetic fibers including newspaper pulp, Kraft pulp, cotton pulp, fiber glass resin or carbon fibers and is in an amount of about 2% of the calcium sulfate hemihydrate Kraft pulp is most preferred.

The fire retarding agent is preferably a fire-retarding compound of boron selected from boric acid, boric anhydride, sodium borate anhydrous and sodium tetraborate decahydrate (borax) with boric acid being most preferred.

The strengthening agent is most preferably an aluminium compound selected from aluminium hydroxide, aluminium oxide and sodium aluminate with aluminium oxide being the most preferred but may also a silicon compound selected from sodium silicate, silicon dioxide, silica gel and silicia acid.

In yet a further aspect of the present invention is a process for finishing wallboard joints by applying thereto a-fire-resistant composition to be used with or without joint tape, the improvement consisting of the utilization of a mixture of calcium sulphate hemihydrate, a long-fiber reinforcing material in an amount of about 1% to 5% of the calcium sulphate hemihydrate, a fire-retarding agent in an amount of from about 1% to 25% of the calcium sulphate hemihydrate, a strengthening agent in the amount of from about 1% to 25% of the calcium sulphate hemihydrate.

The preparation of a dry mixture of he fire resistant composition is also contemplated which is comprised of all of the above-noted constituents of the composition excluding water.

A process for finishing wallboard joints, is therefore provided which comprises forming a dry mixture of the fire-resistant composition; mixing the dry mixture with water to application fluidity to form an agneous plaster blurry, and applying the slurry in a thin layer to the wallboard joints. As noted above, the joit finishing composition may also be used in conjunction with joint tape and may be applied before or after taping.

Other features and advantages and objects of the present invention will be more readily understood and become apparent from a consideration of the following description of embodiments of the invention and examples thereof.

## A BRIEF DESCRIPTION OF THE DRAWINGS

Figure 1 is a photomicrograph of calcium sulphate hemihydrate prior to the hammer milling process;

Figure 2 is a photomicrograph of calcium sulphate hemihydrate which has been hammer milled; and

Figure 3 shows the average response of thermo-couples placed at regular intervals on a wallboard core sample of this invention and on a commercially available wallboard core sample.

## Detailed Description of the Invention

In accordance with this invention, there is provided a gypsum wallboard core formulated from ingredients described hereinafter, said wallboard having increased fire-resistant properties and increased mechanical and fire strength. The meanings of and methods for determining the resistance to fire spread across the gypsum board surface, fire endurance and fire strength are set forth in detail hereinbelow. The resistance to surface fire spread refers to the degree with which the paper wrapper of the gypsum board inflames and allows the fire to spread across its surface. Fire endurance refers to the ability of the gypsum board to maintain its structural integrity under fire conditions and fire strength refers to the ability of the board to withstand compressive and torsional forces under fire conditions. A distinction is made between mechanical and fire strength. Mechanical strength refers to the ability of the board to survive the stresses of handling under construction conditions.

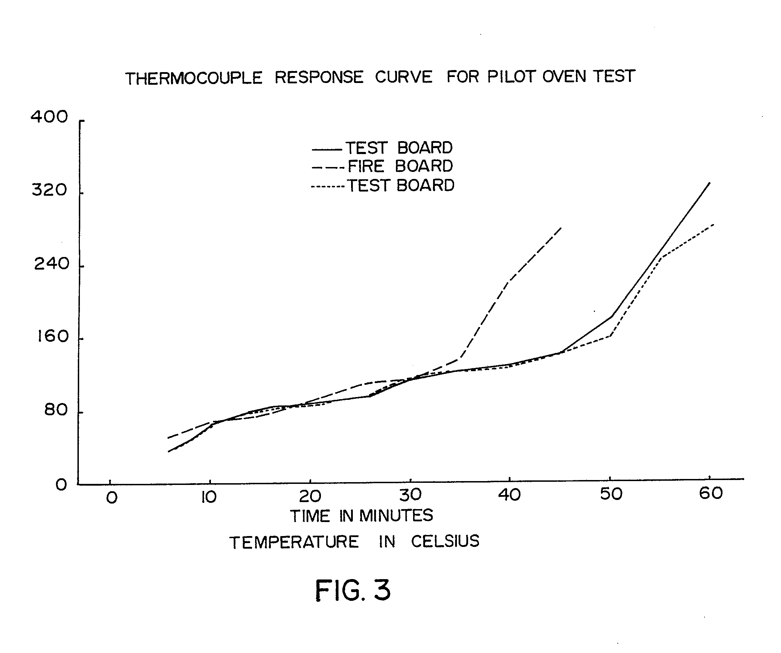

A wallboard core within the scope of this invention is characterized by having, at high temperatures, improved mechanical and fire strength, dimensional stability and integrity properties heretofore unavailable for commercially available wallboard. The survival times illustrated in Table 1 below and the results of the fire endurance test as illustrated in Figure 3 are indicative of the extent to which the wallboard core exhibits such properties when subjected to heat.

A combination of ingredients that have been found to be capable of being processed into gypsum wallboard core having the desired increase in fire strength, mechanical strength and fire retardancy is calcium sulphate hemihydrate, natural or synthetic fiber reinforcing materials such as newsprint pulp, kraft pulp, cotton pulp, straw pulp, fiber glass resins, carbon fibers or any long fiber material, a fire-retarding compound of boron including boric acid, anhydrous boric acid, sodium tetraborate decahydrate (borax) and sodium borate anhydrous; a strengthening agent selected from aluminum compounds including aluminum hydroxide, aluminum oxide, and sodium aluminate, and silicon compounds including sodium silicate, silicon dioxide, silica gel and silicic acid; and water.

Other ingredients can be optionally added to the above combination including foaming, retarding and accelerating agents to provide the correct setting time.

The ingredients mentioned above can be processed and formed according to known techniques, described more fully below, into the fire-resistant wallboard of this invention having improved fire strength. Generally speaking, this involves forming the core from an aqueous slurry containing the ingredients. In accordance with a process of the present invention, natural mined calcium sulphate hemihydrate or by-product calcium sulphate hemihydrate from phosphate fertilizer production (also known as phosphogypsum) is milled and calcined in an oven suitable for the purpose and optionally with the addition of boric acid, typically 5%. This calcination is different from the calcination in the absence of boric acid since additional heat is produced by the reaction of the boric acid with the calcium sulphate hemihydrate (stucco) which has different properties from ordinary stucco. Alternatively, the addition of the boric acid may be made at some point after the calcining of the gypsum.

The resulting stucco is hammer milled to reduce the particle size from 12 microns ($\mu$) to 3 microns and to provide particles with a more angular shape. The resultant stucco is mixed with sufficient water to produce a suitable slurry and mixed with an additional quantity of aluminum hydroxide, typically 5%. If boric acid was not added during calcining, it can added at this point. The slurry can be mixed with additional agents such as foaming agents to reduce its density; or retarding agents and accelerating agents to provide the correct setting time period. The slurry is then allowed to harden between two wrappers typically paper, to form a board suitable for construction purposes.

The following examples are illustrative of a composition of this invention and are not to be considered limiting.

Example 1

1,000 grams of calcined stucco was hammer milled in a Raymond Laboratory Mill. It was then mixed with 50 grams of boric acid and 50 grams of Al(OH)$_3$. To this was added 2.5 grams of glass fibers (1/4 inch - 3/4 inch) and 7.5 grams of newsprint that had been pulped in a blender with 175 millilitres of water. Water in the amount of 700 millilitres was added and the mixture stirred for 1.5 minutes. The mixture was poured into a paper envelope in a 9" × 13" mold and was allowed to set for 45 minutes. The resulting board sample was then dried in a oven at 120°F for 24 hours.

Example 2

1,000 grams of calcined stucco was hammer milled in a Raymond Laboratory Mill. It was then mixed with 50 grams of basic acid and 50 grams of Al(OH)$_3$. To this was added 10 grams of kraft fiber that has been pulped in a blender with 175 millilitres of water. Water in the amount of 700 millilitres was added and the mixture stirred for 1.5 minutes. The mixture was poured into a paper envelope in a 9" × 13" mold and was allowed to set for 45 minutes. The resulting board sample was then dried in an oven at 120°C for 24 hours.

Examples 1 and 2 are two examples which illustrate a method of preparing board samples of the compositions of the present invention.

Further experimentation confirms the improved properties of these new compositions.

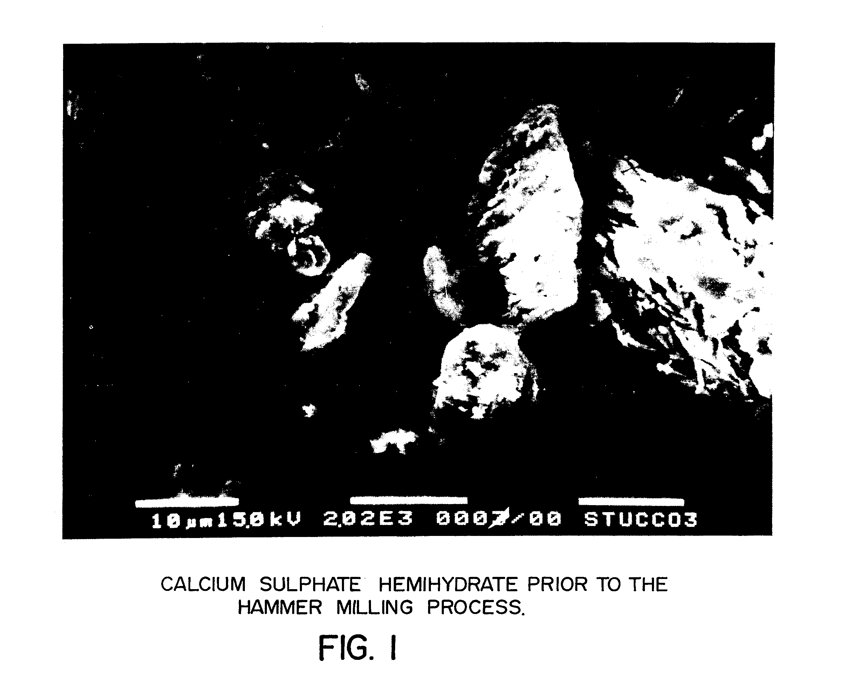

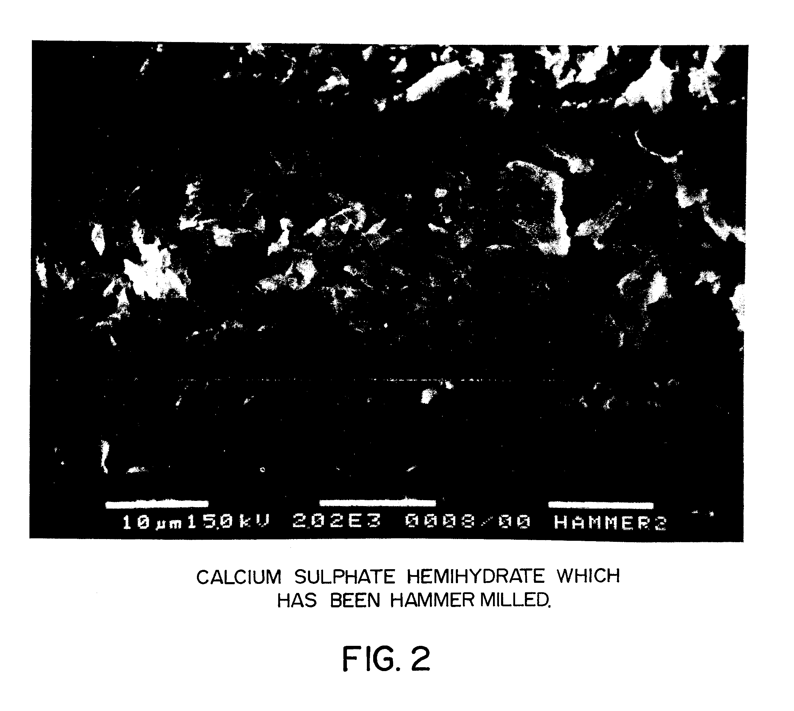

The particle size of calcium sulphate hemihydrate before and after hammer milling was measured using scanning electrons microscopy. This allows the direct measurement of the size of the individual particles. More importantly it allows the shape of particles to be compared. While roller milling or rod milling produces particles with a rounded shape, hammer milling produces particles with a more angular shape. In addition the average particle sizes is reduced from 12 microns to 3 microns. This is apparent from Figures 1 and 2 where Figure 1 shows calcium sulphate hemihydrate after calcining but before final hammer milling and Figure 2 shows the same material after hammer milling. It is also apparent from Figures 1 and 2 that hammer milling produces a product with a more even distribution of particle sizes.

Since the standards described for measuring fire-strength require a complex oven and large board samples, an experiment has been designed to measure the fire strength of smaller prototype gypsum board samples. In this experiment, a board sample 11" × 1.00" by 1/2" was clamped at one end and a weight of 450 grams attached to the other end. A high temperature natural gas/oxygen flame was then directed at the under side of the board sample at the mid-way point. This flame rapidly burnt a hole in the board sample and emerged on the other side. The size of the hole burnt in the sample was approximately one-half of the width of the board. The damage done to the board sample by this flame was measured as the time the board sample took to break in half. The nature of this damage was the cracking and shrinking in the remaining 1/4" of gypsum on either side of the hole through which the flame emerged. This should correspond to the damage done to the gypsum board under normal fire conditions.

This method was designed to provide a sensitive measurement of fire damage and it was apparent from the experimental results that this was achieved. Furthermore, it is believed that this method provides a good measure of the same properties as measured by the NSC/ULC CAN4-S101-M82 standard. It measures the structural strength of the board sample under load and under fire conditions.

In addition, it provides a qualitative measurement of the samples ability to resist surface flame spreading as measured under NSC/ULC CAN4-S102-480. This was carried out by observing the extent of charring on the surface of the board sample after the flame emerged from the surface. In samples containing no boric acid, the charring of the surface paper quickly extended to the sides of the boards and the sample quickly failed, usually after 4 minutes. In samples which contained boric acid the charring never extended to the sides of the board samples even after 30 minutes in some cases.

The fire strength of various board samples was measured by the time required for them to fail under the described conditions as shown in Table 1.

## TABLE 1

| No. | Gypsum Type | Fibre Filler | $\%H_3BO_3$ | $\%Al(OH)_3$ | Survival Time ‡ |
|---|---|---|---|---|---|
| 1 | Ordinary | 100% Newsprint | 0.0 | 0 | 3.49 mins |
| 2 | Ordinary | 100% Newsprint | 2.5 | 0 | 5.30 mins |
| 3 | Ordinary | 100% Newsprint | 5.0 | 0 | 6.19 mins |
| 4 | Ordinary | 75% Fiberglass † | 2.5 | 0 | 7.29 mins |
| 5 | Ordinary | 75% Fiberglass † | 5.0 | 0 | 7.74 mins |
| 6 | Ordinary | 75% Fiberglass † | 7.5 | 0 | 8.48 mins |
| 7 | Hammer Milled | 75% Fiberglass † | 0 | 0 | 4.23 mins |
| 8 | Hammer Milled | 75% Fiberglass † | 2.5 | 0 | 7.92 mins |
| 9 | Hammer Milled | 75% Fiberglass † | 5.0 | 0 | 8.99 mins |
| 10 | Hammer Milled | 100% Newsprint | 5 | 0 | 7.68 mins |
| 11 | Hammer Milled | 50% Newsprint,50% kraft | 5 | 0 | 13.34 mins |
| 12 | Hammer Milled | 100% kraft | 5 | 0 | 24.2 mins |
| 12a | Hammer Milled | 100% kraft | 5 | 5 | 43.5 mins |
| 13 | Hammer Milled | 50% Newsprint,50% kraft | 5 | 5 | 35.4 mins |
| 13a | Hammer Milled | 50% Newsprint,50% kraft | 0 | 5 | 6.6 mins |
| 14 | Ordinary | 100% Newsprint* | 2.5 | 0 | 6.61 mins |
| 15 | Ordinary | 100% Newsprint* | 5.0 | 0 | 6.88 mins |
| 16 | Commercial | 100% Fiberglass | 0 | 0 | 2.39 mins |

†remainder of fiber filler is newsprint
*denotes wrapper treated with boric acid
‡minutes are in decimals

The mechanical strength of the various compositions of stucco, hammer milled stucco, boric acid and aluminum hydroxide was measured by casting the composition into 2" cubes. These cubes did not contain fiber filler and so their strength did not reflect the added effect that these additional components have on gypsum board. The cubes were dried to a constant weight and their compressive strength was measured in a hydraulic press as the force in pounds per square inch (psi) required to fracture them. These values including the kilopascal equivalents are given in Table 2.

TABLE 2

| No. | Gypsum Type | Breaking Force (PSI) | (KPa;) | $\%H_3BO_3$ | $\%Al(OH)_3$ |
|---|---|---|---|---|---|
| 1 | Ordinary | 5,227 | 36,039 | 0.0 | 0.0 |
| 2 | Hammer Milled | 5,733 | 39,528 | 0.0 | 0.0 |
| 3 | Hammer Milled | 5,452 | 37,590 | 2.5 | 0.0 |
| 4 | Hammer Milled | 4,870 | 33,578 | 5.0 | 0.0 |
| 5 | Hammer Milled | 5,198 | 35,839 | 5.0 | 5.0 |

The density of the various board samples was compared to that of commercial 1/2" fire-rated board. This was done by weighing equal sizes of each type of board. It was found that the prototype board samples were 1.08 times heavier than commercial board. This was to be expected since commercial board uses foaming agents to entrain air in the finished product to reduce its weight.

The experimental results set forth in Tables 1 and 2 show a number of trends which indicate the ideal composition for a high-strength fire-resistant gypsum board.

The addition of boric acid to the board greatly increases its fire-strength. This is apparent in samples 1-3, 4-6 and 7-9. The addition of 5% boric acid in all series serve to approximately double the survival time of board samples in the fire-strength test. The effect is more noticeable when flammable fiber fillers are used such as newsprint. The boric acid contributes less noticeably to the survival time of compositions of non-flammable fillers such as fiber glass.

The coating of the outer wrapper with additional boric acid gave a smaller but measurable increase in fire-strength. This is apparent in samples 2 and 14, and 3 and 15. The effect is small since the boric acid in this slurry is already contributing to the fire-proofing of the wrapper.

The effect of hammer milling the stucco produces a measurable increase in the fire-strength of the resulting board. This is evident in Table 1, samples 4-6 and samples 7-9. The mechanical strength is also improved as seen in Table 2, samples 1 and 2.

The type of fiber used has a marked effect on the fire strength. This can be seen in Table 1. Fiber glass and newsprint mixtures are stronger than newsprint alone as in samples 1-3 and 4-6. Use of longer natural fibers such as kraft pulp also improves the fire strength as in samples 10-12. In fact, the use of kraft pulp gives board samples which have even greater fire-strength than the corresponding fiber glass containing samples. Compare, for example, sample 9 with samples 10-12. It can be seen that a 50% mixture of kraft pulp and newsprint is stronger than 75% mixture of fiber glass and newsprint. This data confirms that the use of longer reinforcing fibers greatly improves fire-strength. In addition, this trend holds true if flammable fibers are used in conjunction with fire retarding agents such as boric acid.

The addition of aluminum hydroxide to the composition greatly increases the fire-strength. This is seen from Table 1, samples 11 and 13. When 5% of aluminum hydroxide is added (sample 13) there is a marked increase in the survival time. The effect of aluminum hydroxide is dramatic and produces the strongest board measured in this series. Such a board sample has a survival time at least 8 times greater than commercially fire-rated gypsum board. The mechanical strength is also improved as seen in Table 2, samples 4 and 5.

Sample 13a of Table 1 illustrates the effect of aluminum hydroxide on the fire strength of the board in the absence of boric acid. The survival time is greatly reduced and it therefore is necessary to have both a suitable strengthening agent such as aluminum hydroxide and a boron compound having fire resistant properties such as boric acid to produce a gypsum wallboard having the desired fire strength and fire retarding properties.

As shown in 12a of Table 1, the combination of using kraft paper pulp, a long fiber pulp, as a filler in conjunction with the use of boric acid and aluminum hydroxide results in a further increase in the survival time of the board when compared with that of board No. 13. Thus, the use of long fiber pulp which was previously heretofore considered unacceptable for use in gypsum wallboard production due to its flammability, in conjunction with boric acid or some other boron compound having fire retarding properties and a strengthening agent such as aluminum hydroxide, or other suitable aluminum or silicon compounds produces a wallboard having the greatest fire strength.

The gypsum board of the present invention has also been compared to a piece of standard fire-rated gypsum board in a fire endurance test. Both board samples are 1/2" in thickness and were made into a sample wall using 1-5/8" metal studs spaced 12" apart. The commercial board was approximately 48" × 26" and contained 100% fiber glass filler with 0% boric acid and 0% aluminum hydroxide. The subject board was a mosaic of 8 pieces, 10" × 12" and contained 100% kraft pulp filler with 5% boric acid and 5% aluminum hydroxide. The sample wall was then positioned as part of a pilot scale vertical fire test furnace. This furnace is used to evaluate new fire resistant products according to the standard temperature curve as found in the Underwriters' Laboratories of Canada, "Standard Methods of Fire Endurance Tests of Building Construction and Materials" (Can. 4-S101-M82, at p. 5).

The graph as shown in Figure 3 shows the average response of thermocouples placed at regular intervals on both samples. The "test board" refers to the board sample of the present invention and the "fire board" to the commercial sample. The "fire-board" failed completely at 45 minutes so the time/temperature points of this material cease at that time. The "test board" was still intact at 60 minutes when the test was stopped.

Two curves are shown for the "test board" sample. One of the "test board" samples shows a more rapid temperature rise due to the failure of the neighbouring piece of fire-rated board. In an attempt to allow for that effect, a new curve was generated which does not include the values due to that thermocouple. The new curve is labelled "test 1 board" and it can be seen that it does not differ greatly from the curve for "test board".

It is generally agreed that the most difficult test of a fire wall covering is with metal studs. This is because of the expansion of the metal plus its capacity to conduct heat leads to rapid failure of the partition. Thus the test conducted was the most rigorous one possible. The test board sample showed an endurance rating at least 25% longer than the corresponding commercial board. It is anticipated that with larger samples the disparity will become greater.

## Example 3 - Gypsum Based Joint Filler Composition

While conducting experiments on a new fire resistant gypsium composition, ordinary commercial joint fillers were used to join the boards produced in the laboratory. In the course of testing these boards, it became apparent that the joint filling compound represented a weak link in the fire protection offered by the board. Under fire conditions the joints were observed to fail rapidly and the transmission of flame through the cracked joints represented a major made of fire transmission.

Since the gypsium composition used as the core matrix of the boards offered increased fire resistance over standard gypsium and since joint fillers can and are made from gypsium, it seemed logical to examine the use of joint fillers based on this novel fire-resistant gypsium composition.

## Composition of the New Joint Filling Compound

Experience in the addition of chemical substances to standard stucco (calcium sulphate hemihydrate, $CaSO_4 1/2H_2O$.) had taught us that aluminium hydroxide and boric acid used in conjunction with long reinforcing fibres such as kraft pulp contribute to a greatly increased fire resistance. It is therefore believed that this comes about through a reduced tendency of the resulting plaster (calcium sulphate dilhydrate, $CaSO_4 2H_2O$) to lose water of crystallization by recalcining and through prevention of crack propagation by the reinforcing nature of the long fibres when calcination does finally take place.

While numerous combinations of these four ingredients show this improved fire resistance the effect is maximized with the following formula:

> 1000 grams stucco (calcium sulphate hemihydrate)
> 50 grams aluminium hydroxide
> 50 grams boric acid
> 20 grams long fibre pulp
> sufficient water to achieve the correct consistency.

## Test Procedures

Tests were carried out to compare the fire resistance of this new composition with ordinary commercial joint filling compound. For the purpose of comparison the commercial joint filler used was Marvellite.

A series of laths 1.5" in width and 7" in length and composed of commercial 1/2" fire rates board were placed end to end in a jig which guaranteed a joint gap of 5/32". The joint was filled with the new joint filling composition and taped on both sides.

When the joints had dried for 24 hours they were tested in a fashion similar to that used for testing the new composition gypsum board. The laths were clamped at one end and a weight of 150 grams placed at the other end. The centre of the lath which contained the joint was then exposed to a high temperature oxygen/natural gas flame and the time for the lath to fail and crack at the joint was measured.

## Test Results

A series of 5 laths joined with commercial filler and 5 laths joined with the new composition filler were tested as described above and provided the following survival times;

> Commercial Joint Filler    1.87 min
> New Gypsum Composition Filler    4.18 min

## Conclusion

It is apparent from the increased survival time of laths joined with the new composition filler, when compared to commercial joint filling compound that this mixture offers a greater than two fold increase in fire resistance. It is anticipated that when used in conjunction with the improved fire resistant gypsum composition board of this invention that the combination will offer a much superior fire resistance type of partition.

## Claims

1. A fire-resistant composition particularly adapted for use as the core matrix in the production of gypsum board and exhibiting increased mechanical and fire-strength and structural integrity when subjected to elevated temperatures said composition comprising:

(a) calcium sulphate hemihydrate;

(b) a long-fiber reinforcing material in an amount of from about 1 % to 5 % of the calcium sulphate hemihydrate;

(c) a fire retarding agent in an amount of from about 1 % to 25 % of the calcium sulphate hemihydrate;

(d) a strengthening agent in an amount of from about 1 % to 25 % of the calcium sulphate hemihydrate; and

(e) water.

2. A fire-resistant composition according to Claim 1, wherein said fibre-reinforcing material are natural or synthetic fibres, such as news pulp, kraft pulp, cotton pulp, fibreglass resins, carbon fibres or other long-fibre materials.

3. A fire-resistant composition according to Claim 1 or 2, wherein the calcium sulphate hemihydrate is alpha-calcium sulphate hemihydrate.

4. A fire-resistant composition according to any one of Claims 1 to 3, wherein the fire retarding agent is a fire-retarding compound of boron such as from boric acid, boric anhydride, sodium borate anhydrous or sodium tetraborate decahydrate (borax).

5. A fire-resistant composition according to any one of Claims 1 to 4, wherein the strengthening agent is an aluminium compound, such as aluminium hydroxide, aluminium oxide or sodium aluminate, or a silicon compound, such as sodium silicate, silicon dioxide, silica gel or silicic acid.

6. A fire-resistant composition according to any one of Claims 1 to 5 wherein the calcium sulphate hemihydrate is hammer milled to reduce the particle size to about 3 micrometers.

7. A process for preparing a fire-resistant composition particularly adapted for use as the core matrix in the production of gypsum board and exhibiting increased mechanical and fire strength and structural integrity said process comprising:

(a) adding to naturally mined or a by-product calcium sulphate dihydrate which has been milled, a fire-retarding agent, the fire-retarding agent being employed in the sufficient amount to provide fire resistance at elevated temperatures;

(b) calcining said calcium sulphate dihydrate;

(c) hammer milling the resultant calcium sulphate dihydrate to reduce the particle size to about 3 mincrometers;

(d) adding water sufficient to provide a suitable slurry;

(e) adding to said slurry a fibre-reinforcing material;

(f) adding to said slurry a strengthening agent in a sufficient amount to provide the desired mechanical and fire strength; and

(g) allowing said slurry to harden between two wrappers to form the matrix core of the wallboard.

8. A process according to Claim 7 wherein the fire-retarding agent is instead added after the calcining of the calcium sulphate dihydrate.

9. A process according to Claim 8 wherein the fire-retarding agent is instead added after the addition of The strengthening agent.

10. A process according to Claim 8 or 9 wherein the calcium sulphate dihydrate is of the alpha form.

11. A process according to any one of Claims 8 to 10 wherein the fibre-reinforcing material is selected from natural or synthetic long fibres, such as kraft pulp, cotton pulp, fibreglass resins, carbon fibres or other long-fibre materials.

12. A process according to any one of Claims 8 to 11 wherein the fire-retarding agent is a fire-retarding compound of boron, boric acid, boric anhydride, sodium borate anhydrous and sodium tetraborate decahydrate (borax).

13. A process according to any one of Claims 8 to 12 wherein the strengthening agent is aluminium compound, such as aluminium hydroxide, aluminium oxide or sodium aluminate, or silicon compound, such as sodium silicate, silicon dioxide, silica gel or silicic acid.

14. Gypsum wallboard comprising a cover sheet bonded to each surface thereof and a core matrix, said core matrix comprising a fire-resistant composition according to any one of Claims 1 to 6.

15. Gypsum wallboard according to Claim 14 wherein the cover sheet is paper.

16. Gypsum wallboard according to Claim 14 or 15, wherein the cover sheet is treated with a boron compound having fire-resistant properties, such as boric acid, boric anhydride, sodium borate anhydrous or sodium tetraborate decahydrate (borax).

17. A fire-resistant composition according to any one of Claims 1 to 6 wherein said composition is applied in situ by spraying the composition in slurry form on to an object to provide a fire-resistant coating on said object.

18. A fire-resistant composition according to any one of Claims 1 to 6 adapted for use in finishing joints between wallboard panels.

19. A fire-resistant wallboard joint composition according to Claim 18 comprising the long-fibre reinforcing material in an amount of about 2 % of the calcium sulfate hemihydrate; the fire retarding agent in an amount of about 5 % of the calcium sulfate hemihydrate; and the strengthening agent in an amount of about 5 % of the calcium sulfate hemihydrate.

20. A process of finishing wallboard joints by applying thereto a fire-resistant composition according to any one of Claims 1 to 6 adapted to be used in conjunction with joint tape.

21. A process of finishing wallboard joints with a fire-resistant composition which comprises forming a dry mixture of calcium sulfate hemihydrate, long-fibre reinforcing material in an amount from about 1 % to 5 % of the calcium sulfate hemihydrate, a fire retarding agent in the amount of from about 1 % to 25 % of the calcium sulfate hemihydrate, a strengthening agent in the amount of from about 1 % to 25 % of the calcium sulfate hemihydrate; mixing said dry mixture with water to application fluidity to form an aqueous plaster slurry and applying said slurry in a thin layer to wallboard joints.

22. A process for finishing joints between wallboards of building structures in the event of fire, which comprises applying to the joint an appropriate amount of a fire-resistant wallboard joint composition according to Claim 18 or 19, and affixing said composition to the joint by inserting it therein.

23. A process according to Claim 22 wherein said process further comprises the step of covering the fire-resistant joint composition with joint tape.

24. A process according to Claim 23 wherein said joint tape is applied prior to the application of the fire-resistant wallboard joint composition.

25. A method for preparing a fire-resistant wallboard joint composition which can be applied to completely fill the joint between adjoining panels of gypsum wallboard with or without a tape material, said process comprising:

(a) adding to calcium sulfate dihydrate which has been milled, a fire-retarding agent, the fire-retarding agent being employed in a sufficient amount to provide fire-resistance at elevated temperatures, said fire retarding agent being selected from boric acid, boric anhydride, sodium borate anhydrous and sodium tetraborate decahydrate (borax);

(b) calcining said calcium sulfate dihydrate;

(c) hammer milling the resultant calcium sulfate dihydrate to reduce the particle size to about 3 microns;

(d) adding water to application fluidity to form a thick aqueous plaster slurry suitable for applying said slurry to wallboard joints;

(e) adding to said slurry a fibre-reinforcing material, said fibre-reinforcing material being selected from the group consisting of used pulp, kraft pulp, cotton pulp, fibreglass resin and carbon fibres;

(f) adding to said slurry a strengthening agent in a sufficient amount to provide the desired mechanical and fire strength, said strengthening agent being an aluminium compound selected from aluminium hydroxide, aluminium oxide and sodium aluminate.

26. A process according to Claim 25 wherein the fire-retarding agent is added after the calcining of calcium sulfate dihydrate or after the addition of strengthening agent.

27. A process according to Claim 25 wherein the fire retarding agent and strengthening agent are added before the calcining step.

11

CALCIUM SULPHATE HEMIHYDRATE PRIOR TO THE HAMMER MILLING PROCESS.

FIG. I

CALCIUM SULPHATE HEMIHYDRATE WHICH HAS BEEN HAMMER MILLED.

FIG. 2

THERMOCOUPLE RESPONSE CURVE FOR PILOT OVEN TEST

FIG. 3